# EUROPÄISCHE PATENTANMELDUNG

(11) **EP 0 883 264 A1**
(43) Veröffentlichungstag der Anmeldung: **09.12.1998**
(21) Anmeldenummer: 98109296.8
(22) Anmeldetag: 22.05.1998
(51) Int. Cl.: H04L 12/437, B60R 16/02

(54) **Datenübertragungssystem**

(30) Priorität: 04.06.1997 DE 19723274
(71) Anmelder: Harting KGaA, 32325 Espelkamp (DE)
(72) Erfinder: Harting, Dietmar, Dipl., 32339 Espelkamp (DE); Coors, Erich, Dipl.-Ing., 32339 Espelkamp (DE); Nowack, Dietmar, 32339 Espelkamp (DE)

(57) **Zusammenfassung**

Für ein Datenübertragungssystem auf der Basis von D2B-Optical wird vorgeschlagen, die Übertragungswege redundant auszubilden, wobei der alle Teilnehmerstationen enthaltende optische Ring der 'Standard-Konfiguration' unter Verwendung von optischen Verzweigern in miteinander verbundene Teilringe aufgespalten ist.

## Beschreibung

Die Erfindung betrifft eine verbesserte Ausführungsform des Datenübertragungssytems D2B-Optical, insbesondere für Anwendungen im Bereich von Kraftfahrzeugen.

Das D2B-Optical-System für den Datenaustausch zwischen den Audio- sowie Kommunikations-Geräten eines PKW ist standardmäßig als Master-Slave-System in Form eines optischen Ringbusses aufgebaut, wobei jede Teilnehmerstation als optischer Repeater für die nachfolgenden Stationen des Ringes wirkt. Dieses erlaubt eine sehr effiziente Datenübertragung, beinhaltet aber den Nachteil, daß bei Ausfall einer Teilnehmerstation der Datenverkehr des gesamten Ringes zusammenbricht. Das Gleiche gilt im Falle der mechanischen Zerstörung eines der optischen Verbindungskabel zwischen den Teilnehmerstationen, z.B. infolge eines Unfalles.

Der Erfindung liegt die Aufgabe zugrunde, die Funktionsfähigkeit des Datenübertragungssystems auch bei Ausfall einer Teilnehmerstation oder Unterbrechung des optischen Übertragungsweges aufrechtzuerhalten.

Diese Aufgabe wird dadurch gelöst, daß die Übertragungswege redundant ausgebildet sind, wobei der alle Teilnehmerstationen enthaltende optische Ring der 'Standard-Konfiguration' unter Verwendung von optischen Verzweigern in miteinander verbundene Teilringe aufgespalten ist.

Vorteilhafte Ausgestaltungen der Erfindung sind in den Ansprüchen 2 bis 4 angegeben.

Dabei wird
1. unter Verwendung von optischen Verzweigern der optische Ring in Form von untereinander verbundenen Teilringen aufgebaut (= redundante Signalwege), und
2. - anhand einer fortwährenden Überwachung der D2B-Optical internen Datentelegramme, - bei einer im Hauptring auftretenden Störung, der Datenverkehr automatisch auf einen der redundanten optischen Teilringe umgeleitet, so daß die Funktion der Teilnehmer des Kernbereiches bezüglich des Datenaustausches weiterhin gegeben ist.

Diese Ausführungsform des D2B-Optical bietet gegenüber der 'Standardlösung' eine erhebliche verbesserte Betriebssicherheit im Falle von partiellen Geräte-Störungen / Zerstörungen der optischen Kabel.

In der vorgeschlagenen Form der Realisierung liegen folgende weitere Vorteile:
- Die Struktur des optischen Netzes kann individuell an die jeweiligen Einbau-Gegebenheiten angepaßt werden (z.B. einer oder mehrere redundante Wege).
- Durch die Verwendung von optischen Verzweigern mit nur wenigen Ausgängen ist - im Vergleich zu einem Netz in Stern-Konfiguration - eine günstige optische Leistungsbilanz gegeben; d.h. nur geringe Einbußen bzgl. der maximalen Übertragungsentfernung.
- Die vorgeschlagene Netzstruktur harmoniert gut mit dem Prinzip des Protokoll-Handlings bei D2B-Optical:
   das Umschaltkriterium im Fehlerfall kann (ohne zusätzlichen Hardware-Aufwand) z.B. vom systemeigenen 'transparenten Kanal' geliefert werden.

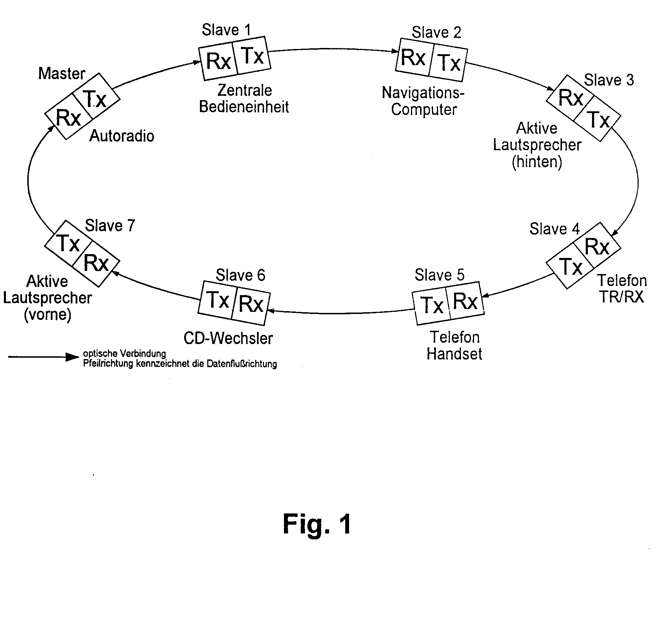

Ein Ausführungsbeispiel der Erfindung ist in den Figuren 1 bis 4 dargestellt und wird im folgenden näher beschrieben:

In Fig. 1 ist ein Beispiel der herkömmliche Ausführung des D2B-Optical Ringes dargestellt. Im Falle einer Unterbrechung des Ringes ist der Datenaustausch zwischen den Teilnehmen gestört. So können z.B. bei Ausfall des CD-Wechslers Daten von der Telefon-TR/RX Einheit an das Telefon Handset gesendet werden, aber der Datenverkehr von dem Telefon Handset zur Telefon TR/RX Einheit ist unterbrochen. Ergebnis: Die Funktion des Telefons ist gestört.

In Fig. 2 ist ein Beispiel des geänderten D2B-Optical Ringes - mit 2 redundanten Teilringen - im nicht gestörten Zustand zu sehen.
Die Aufteilung in optische Teilringe erfolgt durch optische Verzweiger. Daraus ergibt sich ein Kernbereich, in dem sich die Teilnehmer befinden, deren Funktion im Störfall erhalten bleiben soll. Weiterhin wird ein Hauptzweig A und die redundanten Zweige B und C gebildet. In den Zweigen B und C befinden sich Busteilnehmer, welche nur Daten empfangen und normalerweise keine Daten versenden müssen. Dies gewährleistet im Normalbetrieb die Funktion aller Busteilnehmer.
Im ungestörten Fall findet kein Datenverkehr von den Slaves 6 und 7 zu dem unteren optischen Verzweiger statt.

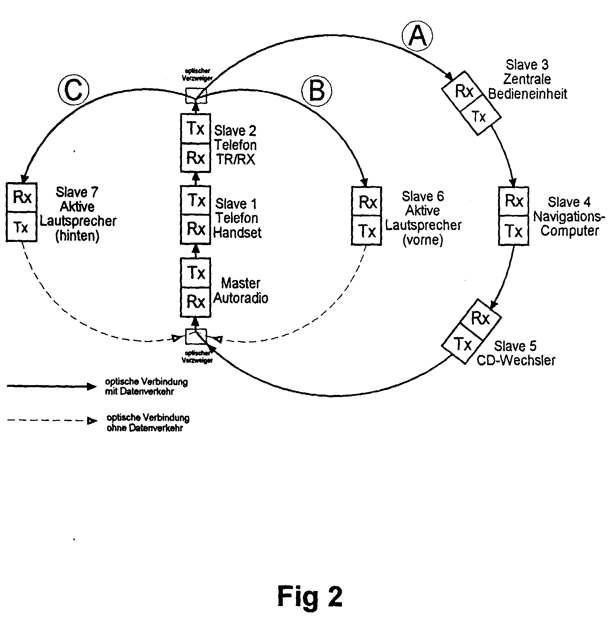

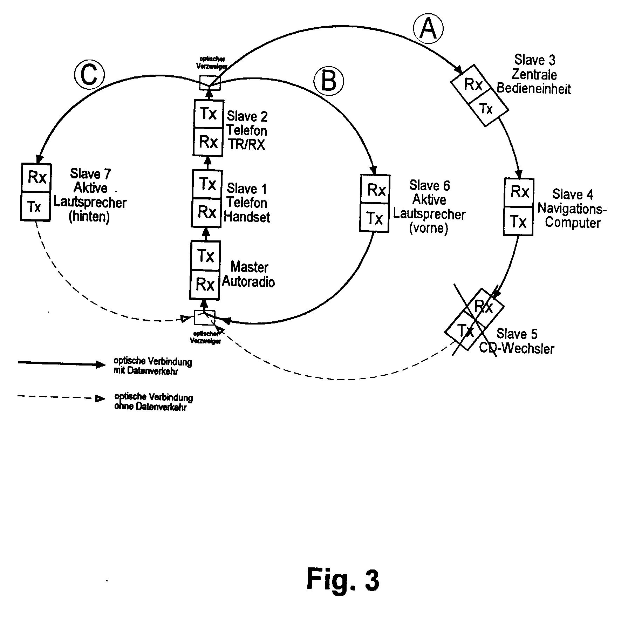

In Fig. 3 ist die optische D2B-Struktur von Fig. 2 mit einem Ausfall eines Teilnehmers in dem Zweig A zu sehen.
In dem hier gezeigten Beispiel ist ein Ausfall des CD-Wechslers dargestellt. Zur Erkennung dieses Fehlers wird z.B. der transparente Kanal herangezogen (welcher in herkömmlichen Applikationen keine Anwendung findet). In diesem Beispiel wird der Ring durch Aktivierung der Repeat-Funktion von Slave 6 über den redundanten Zweig B geschlossen. Mit dieser Maßnahme ist die Funktion des Kernbereiches wieder hergestellt.

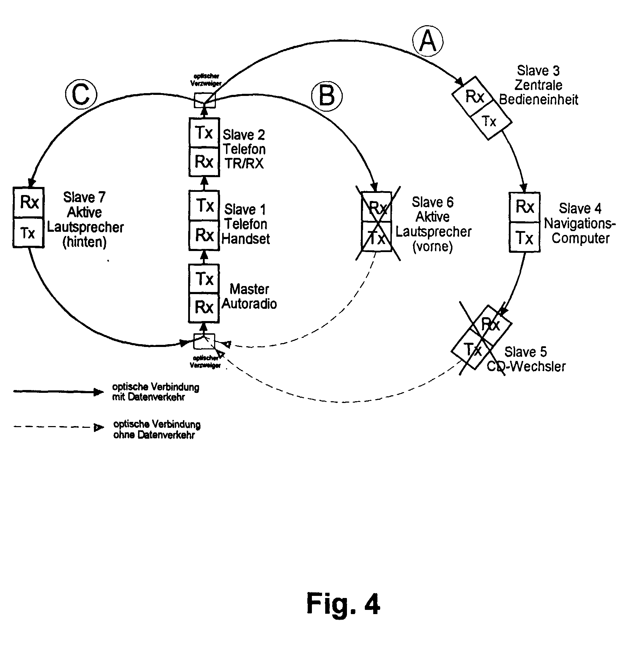

In Fig. 4 ist ein Beispiel mit Ausfällen von Teilnehmern im Zweig A und im Zweig B zu sehen.

In diesem Fall wird der Ring durch Aktivierung von Slave 7 über den Teilring C wieder geschlossen. Die Funktion von Autoradio und Telefon sind somit nach wie vor gegeben.
Durch Einführung mehrerer redundanter Zweige läßt sich System also auch gegen Ausfälle in mehreren Zweigen absichern.
Die Fehlererkennung über den 'transparenten Kanal' kann z.B. dadurch erfolgen, daß ein Signal von einem der Teilnehmer im Hauptring im 'transparenten Kanal' in Umlauf gesetzt und von den Teilnehmern der redundanten Teilringe überwacht wird.
Bei einer Unterbrechung im Hauptring kann dieses Signal in den Teilringen nicht mehr empfangen werden. Dieser Ausfall des Signals aktiviert die Repeater-Funktion der entsprechenden Slaves in den redundanten Teilringen. Die Möglichkeit dieser Umschaltung ist bei den Standard Protokoll-Bausteinen bereits enthalten, so daß für die Realisierung dieser Funktion kein zusätzlicher Hardware-Aufwand erforderlich ist.

## Patentansprüche

1. Datenübertragungssystem auf der Basis von D2B-Optical, dadurch gekennzeichnet,
daß die Übertragungswege redundant ausgebildet sind, wobei der alle Teilnehmerstationen enthaltende optische Ring der 'Standard-Konfiguration' unter Verwendung von optischen Verzweigern in miteinander verbundene Teilringe aufgespalten ist.

2. Datenübertragungssystem nach Anspruch 1, dadurch gekennzeichnet,
daß die Teilnehmerstationen gemäß ihrer Funktion / Wichtigkeit den einzelnen Teilringen zugeordnet sind.

3. Datenübertragungssystem nach Anspruch 1 oder 2, dadurch gekennzeichnet,
daß für die Umschaltung / Aktivierung der optischen Teilringe z.B. ein auf dem 'transparenten Kanal' übertragenes Prüfsignal verwendet wird.

4. Datenübertragungssystem nach einem der vorstehenden Ansprüche, dadurch gekennzeichnet,
daß die Fehlererkennung im Hauptring durch den 'Master' erfolgt, und dieser durch Aussenden eines 'Control Frames' die 'Slaves' in den (redundanten) Teilringen aktiviert.
